# FASCICULE DE BREVET EUROPEEN

(11) **EP 4 309 359 B1**
(45) Date de publication et mention de la délivrance du brevet: **11.06.2025**
(21) Numéro de dépôt: 22713394.9
(22) Date de dépôt: 07.03.2022
(51) Int. Cl.: H04N 25/133, H04N 25/705, H04N 25/13

(54) **MOTIF DES COULEURS ET DES PIXELS DE PROFONDEUR POUR UN CAPTEUR D'IMAGES**
MUSTER DER FARB- UND TIEFENPIXEL IN EINEM BILDERFASSUNGSSENSOR
COLOUR AND DEPTH PIXELS PATTERN IN AN IMAGE SENSOR

(30) Priorité: 16.03.2021 FR 2102581
(43) Date de publication de la demande: 24.01.2024
(73) Titulaire: Commissariat à l'Energie Atomique et aux Energies Alternatives, 75015 Paris (FR)
(72) Inventeur: JAMIN, Clémence, 38054 GRENOBLE CEDEX 09 (FR); VAILLANT, Jérôme, 38054 GRENOBLE CEDEX 09 (FR); ROCHAS, Alexis, 38054 GRENOBLE CEDEX 09 (FR); CAZAUX, Yvon, 38054 GRENOBLE CEDEX 09 (FR)
(74) Mandataire: Cabinet Beaumont
(86) Numéro de dépôt international: PCT/EP2022/055724
(87) Numéro de publication internationale: WO 2022/194594

(56) Documents cités:
- US-A1- 2011 085 063
- US-A1- 2012 182 394
- US-A1- 2012 293 696
- US-A1- 2017 111 618

## Description

La présente demande revendique la priorité de la demande de brevet français 21/02581

### Domaine technique

La présente description concerne de façon générale le domaine des dispositifs d'acquisition d'images. La présente description concerne plus particulièrement des dispositifs d'acquisition d'images adaptés à acquérir une image 2D et une image de profondeur d'une scène.

### Technique antérieure

On connaît des dispositifs d'acquisition d'images capables d'acquérir une image 2D et une image de profondeur d'une scène. On connaît notamment des dispositifs comportant des pixels d'image 2D et des pixels de profondeur intégrés dans un réseau de photodétecteurs d'un même capteur d'images. Des exemples de tels dispositifs sont notamment décrits dans les demandes de brevet US2018167606 et US2019191067 précédemment déposées par le demandeur. La demande de brevet US 2012/293696 divulgue un capteur d'images comprenant une pluralité de pixels répartis en groupes élémentaires de 5x5 pixels, chaque ligne et chaque colonne de chaque groupe élémentaire comprenant 1 ou 2 pixels R, 1 ou 2 pixels B, et 2 ou 3 pixels G. Cet agencement diminue le moiré coloré.

### Résumé de l'invention

Il existe un besoin d'améliorer les dispositifs d'acquisition d'une image 2D et d'une image de profondeur d'une scène existants. Il serait notamment souhaitable de réaliser un capteur d'images intégrant, dans un même réseau de photodétecteurs, des pixels d'image 2D et des pixels de profondeur, le capteur présentant, pour l'acquisition des images 2D et des images de profondeur, des performances colorimétriques et des artefacts réduits par rapport aux capteurs connus.

Un objet d'un mode de réalisation est de pallier tout ou partie des inconvénients des dispositifs d'acquisition d'une image 2D et d'une image de profondeur d'une scène connus.

Pour cela, un mode de réalisation prévoit un capteur d'images comprenant une pluralité de pixels répartis en groupes élémentaires, chaque groupe élémentaire étant constitué de plusieurs pixels adjacents agencés en matrice selon des lignes et des colonnes, chaque groupe élémentaire comportant des premiers, deuxièmes et troisièmes pixels d'image visible sensibles dans des gammes de longueurs d'onde différentes et des quatrièmes pixels d'image de profondeur, dans lequel chaque ligne de chaque groupe élémentaire comprend au moins un quatrième pixel.

Selon un mode de réalisation, chaque colonne de chaque groupe élémentaire comprend au moins un quatrième pixel.

Selon un mode de réalisation, les premiers et deuxièmes pixels sont des pixels de chrominance et les troisièmes pixels sont des pixels de luminance.

Selon un mode de réalisation, les premiers pixels sont sensibles majoritairement à de la lumière rouge et les deuxièmes pixels sont sensibles majoritairement à de la lumière bleue.

Selon un mode de réalisation, les troisièmes pixels sont sensibles majoritairement à de la lumière verte.

Selon un mode de réalisation, les troisièmes pixels comportent des pixels d'un premier type et des pixels d'un deuxième type sensibles dans des gammes de longueurs d'onde différentes.

Selon un mode de réalisation, les troisièmes pixels du premier type sont sensibles majoritairement à de la lumière verte et les troisièmes pixels du deuxième type sont sensibles majoritairement à de la lumière blanche, jaune ou vert émeraude.

Selon un mode de réalisation, à l'intérieur de chaque groupe de pixels, toutes les lignes et toutes les colonnes présentent un même nombre de troisièmes pixels du premier type et de troisièmes pixels du deuxième type.

Selon un mode de réalisation, à l'intérieur de chaque groupe élémentaire, toutes les lignes et toutes les colonnes présentent un même nombre de premiers pixels et un même nombre de deuxièmes pixels.

Selon un mode de réalisation, à l'intérieur de chaque groupe élémentaire, chaque ligne comporte deux à quatre fois plus de troisièmes pixels que de premiers pixels.

Selon un mode de réalisation, à l'intérieur de chaque groupe élémentaire, chaque colonne comporte deux à quatre fois plus de troisièmes pixels que de deuxièmes pixels.

Selon un mode de réalisation, à l'intérieur de chaque groupe élémentaire, chaque ligne et chaque colonne comporte autant de deuxièmes pixels que de premiers pixels.

Selon un mode de réalisation, à l'intérieur de chaque groupe élémentaire, chaque ligne et chaque colonne comporte autant de quatrièmes pixels que de deuxièmes pixels.

Selon un mode de réalisation, les quatrième pixels sont des pixels de mesure de distance par temps de vol.

Un mode de réalisation prévoit un capteur d'images comprenant une pluralité de pixels répartis en groupes élémentaires de 5x5 pixels, chaque groupe élémentaire étant constitué de plusieurs pixels adjacents agencés en matrice selon des lignes et des colonnes, chaque ligne et chaque colonne de chaque groupe élémentaire comportant exactement :
- un premier pixel d'image visible sensible majoritairement à de la lumière rouge ;
- un deuxième pixel d'image visible sensible majoritairement à de la lumière bleue ;
- deux troisièmes pixels de luminance ; et
- un quatrième pixel d'image de profondeur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue de dessus illustrant de façon schématique et partielle un exemple d'un mode de réalisation d'un capteur d'images 2D et d'images de profondeur ;
la figure 2 est une vue de dessus illustrant de façon schématique un exemple de réalisation d'un groupe élémentaire de pixels du capteur d'images de la figure 1 ;
la figure 3 est une vue de dessus illustrant de façon schématique un autre exemple de réalisation du groupe élémentaire de pixels du capteur d'images de la figure 1 ;
la figure 4 est une vue de dessus illustrant de façon schématique encore un autre exemple de réalisation du groupe élémentaire de pixels du capteur d'images de la figure 1 ;
la figure 5 est une vue de dessus illustrant de façon schématique encore un autre exemple de réalisation du groupe élémentaire de pixels du capteur d'images de la figure 1 ;
la figure 6 est une vue de dessus illustrant de façon schématique encore un autre exemple de réalisation du groupe élémentaire de pixels du capteur d'images de la figure 1 ;
la figure 7 est une vue de dessus illustrant de façon schématique encore un autre exemple de réalisation du groupe élémentaire de pixels du capteur d'images de la figure 1 ;
la figure 8 est une vue de dessus illustrant de façon schématique encore un autre exemple de réalisation du groupe élémentaire de pixels du capteur d'images de la figure 1 ;
la figure 9 est une vue de dessus illustrant de façon schématique encore un autre exemple de réalisation du groupe élémentaire de pixels du capteur d'images de la figure 1 ;
la figure 10 est une vue de dessus illustrant de façon schématique encore un autre exemple de réalisation du groupe élémentaire de pixels du capteur d'images de la figure 1 ; et
la figure 11 est une vue en coupe illustrant de façon schématique et partielle un pixel d'image 2D et un pixel de profondeur du capteur d'images de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la réalisation des photodiodes et des circuits de commande des pixels d'image 2D et des pixels de profondeur n'a pas été détaillée, la réalisation de tels pixels étant à la portée de la personne du métier à partir des indications de la présente description.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence, sauf précision contraire, à l'orientation des figures.

Sauf précision contraire, les expressions "environ", "approximativement", "sensiblement", et "de l'ordre de" signifient à 10 % près, de préférence à 5 % près.

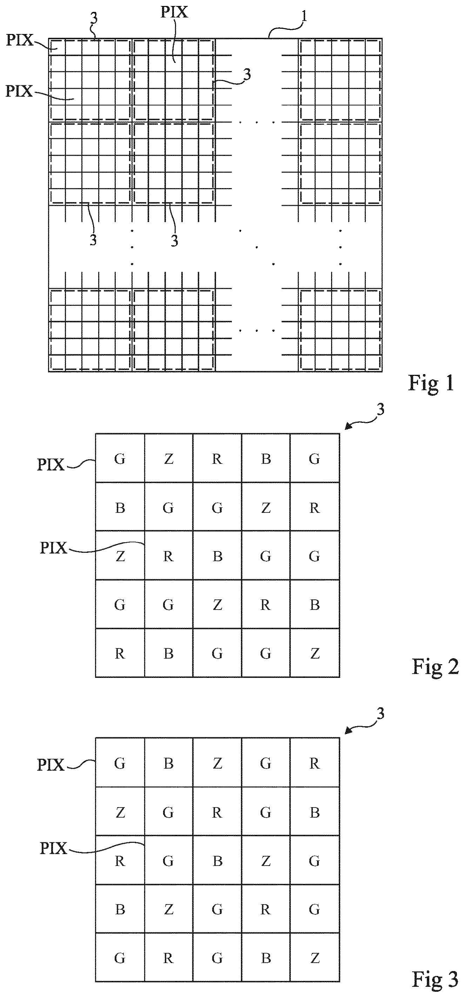

La figure 1 est une vue de dessus illustrant de façon schématique et partielle un exemple d'un mode de réalisation d'un capteur d'images 1.

Dans l'exemple représenté, le capteur 1 comprend une pluralité de pixels PIX. Les pixels PIX sont, dans cet exemple, agencés en matrice selon des lignes et des colonnes. Les lignes sont par exemple sensiblement perpendiculaires aux colonnes. Chaque ligne de pixels PIX du capteur 1 correspond par exemple à une rangée horizontale, dans l'orientation de la figure 1, de pixels PIX adjacents. Chaque colonne de pixels PIX du capteur 1 correspond par exemple à une rangée verticale, dans l'orientation de la figure 1, de pixels PIX adjacents.

Les pixels PIX du capteur 1 présentent par exemple chacun une forme sensiblement carrée, comme illustré en figure 1. Tous les pixels PIX présentent par exemple des dimensions latérales identiques, aux dispersions de fabrication près.

Le capteur d'images 1 comprend, parmi les pixels PIX de la matrice, des pixels d'image 2D ou pixels d'image visible. Les pixels d'image 2D sont par exemple adaptés à capter de la lumière visible provenant d'une scène pour former une image bidimensionnelle de cette scène. Dans le cas où le capteur d'images 1 est adapté à capter des images 2D couleur, les pixels d'image 2D sont de différents types, par exemple adaptés à mesurer des intensités lumineuses dans des gammes de longueurs d'onde distinctes. Chaque pixel d'image 2D comporte par exemple un filtre passe-bande couleur, transmettant par exemple majoritairement un rayonnement vert, rouge ou bleu selon la gamme de longueurs d'onde du pixel.

Parmi les pixels PIX, le capteur d'images 1 comprend, outre les pixels d'image 2D, des pixels de profondeur. Les pixels de profondeur sont par exemple adaptés à estimer des distances entre le capteur 1 et des points de la scène. Cela permet de former une image ou carte de profondeur de la scène. Chaque pixel de profondeur comporte par exemple un filtre passe-bande de profondeur, transmettant par exemple majoritairement un rayonnement dans le proche infrarouge. À titre d'exemple, chaque pixel de profondeur comporte une structure de filtrage présentant une transmittance maximale pour une longueur d'onde égale à environ 850, 905 ou 940 nm et une largeur spectrale (largeur à mi-hauteur de la bande de transmission) comprise entre 20 et 30 nm.

Le capteur 1 est par exemple destiné à être utilisé en combinaison avec une source lumineuse, par exemple une source laser, émettant de la lumière à une longueur d'onde déterminée ou dans une gamme de longueurs d'onde déterminée. La gamme de longueurs d'onde d'émission de la source lumineuse est par exemple située en dehors du domaine visible, par exemple dans le proche infrarouge, par exemple dans la plage de 700 à 1 000 nm. À titre d'exemple, lorsque le filtre de profondeur présente une transmittance maximale pour une longueur d'onde égale à environ 940 nm, la source présente une gamme de longueurs d'onde d'émission centrée sur environ 940 nm et de largeur à mi-hauteur inférieure à 3 nm.

En fonctionnement, le signal lumineux produit par la source lumineuse est émis vers la scène, par exemple sous la forme d'impulsions lumineuses, par exemple périodiques. Le signal lumineux retour réfléchi par la scène est capté par les pixels de profondeur du capteur d'images 1, par exemple de façon à mesurer le temps de vol du signal lumineux en différents points de la scène, ce qui permet d'estimer la distance de ces points par rapport au capteur d'images 1. A titre de variante, le signal lumineux produit par la source lumineuse peut former un motif de lumière structurée. Le signal lumineux retour réfléchi par la scène est capté par les pixels de profondeur du capteur d'images 1. L'analyse des déformations du motif par la scène permet de déterminer des informations de profondeur.

À titre d'exemple, l'image de profondeur de la scène peut être combinée à l'image 2D de cette même scène. Des combinaisons de ce type peuvent être utilisées dans des applications telles que la reconnaissance faciale, la réalité virtuelle ou augmentée, la conduite autonome de véhicules, etc.

En figure 1, les pixels d'image 2D et les pixels de profondeur du capteur d'images 1 ne sont pas différenciés.

Dans l'exemple représenté, les pixels PIX du capteur 1 sont répartis en groupes élémentaires 3. Dans cet exemple, chaque pixel PIX n'appartient qu'à un seul groupe élémentaire 3. Les groupes élémentaires 3 du capteur 1 sont constitués chacun de plusieurs pixels PIX adjacents, c'est-à-dire que deux pixels PIX faisant partie d'un même groupe élémentaire 3 ne sont pas séparés par un ou plusieurs pixels PIX appartenant à un autre groupe élémentaire 3. À l'intérieur de chaque groupe élémentaire 3, les pixels PIX sont agencés en matrice selon des lignes et des colonnes.

Chaque groupe élémentaire 3 définit, en vue de dessus, un motif élémentaire de mosaïque correspondant au plus petit ensemble de pixels PIX à partir duquel il est possible de reconstituer, par des translations horizontales et verticales du motif, l'agencement de tous les pixels PIX de la matrice du capteur 1. Les groupes élémentaires 3 du capteur 1 sont identiques entre eux, aux dispersions de fabrication près. Tous les groupes élémentaires 3 du capteur 1 présentent un même nombre de pixels PIX. En outre, tous les groupes élémentaires 3 présentent un même nombre de pixels d'image 2D et un même nombre de pixels de profondeur. Les pixels d'image 2D et les pixels de profondeur sont agencés les uns par rapport aux autres de façon identique pour tous les groupes élémentaires 3 du capteur 1.

Chaque groupe élémentaire 3 comporte par exemple un réseau de filtres couleur et de filtres de profondeur (« Color and Depth Filter Array » - CDFA, en anglais). Le réseau de filtres couleur et de filtres de profondeur de chaque groupe élémentaire 3 constitue par exemple le plus petit motif à partir duquel il est possible de reconstituer, par des translations du motif, l'agencement des filtres couleur et des filtres de profondeur de toute la matrice de pixels PIX du capteur 1.

La figure 2 est une vue de dessus illustrant de façon schématique un exemple de réalisation du groupe élémentaire 3 de pixels PIX du capteur d'images 1 de la figure 1.

Dans l'exemple représenté, le groupe élémentaire 3 comporte des pixels d'image 2D de différents types et des pixels de profondeur. Plus précisément, dans cet exemple, le groupe élémentaire 3 comporte :
- des pixels R d'image 2D, par exemple sensibles majoritairement à de la lumière rouge ;
- d'autres pixels G d'image 2D, par exemple sensibles majoritairement à de la lumière verte ;
- encore d'autres pixels B d'image 2D, par exemple sensibles majoritairement à de la lumière bleue ; et
- des pixels Z de profondeur, par exemple sensibles majoritairement à de la lumière infrarouge.

Dans l'invention, le groupe élémentaire 3 comporte vingt-cinq pixels PIX répartis selon cinq lignes et cinq colonnes.

Selon l'invention, chaque ligne du groupe élémentaire 3 comporte exactement un pixel Z de profondeur. Le fait que chaque ligne comprenne un pixel Z de profondeur permet de réduire la présence d'artefacts dans l'image 2D visible. En outre, chaque colonne du groupe élémentaire 3 comporte exactement un pixel Z de profondeur. Dans l'exemple représenté, chaque ligne de pixels PIX du groupe élémentaire 3 comprend un seul pixel Z de profondeur. De plus, dans cet exemple, chaque colonne de pixels PIX du groupe élémentaire 3 comprend un seul pixel Z de profondeur.

Dans l'exemple représenté, les lignes de pixels PIX du groupe élémentaire 3 présentent toutes autant de pixels Z que de pixels B. En outre, dans cet exemple, toutes les colonnes de pixels PIX du groupe élémentaire 3 présentent autant de pixels Z que de pixels B.

Dans l'exemple illustré en figure 2, les lignes de pixels PIX du groupe élémentaire 3 présentent toutes un même nombre de pixels R et un même nombre de pixels B. En outre, dans cet exemple, toutes les colonnes de pixels PIX du groupe élémentaire 3 présentent un même nombre de pixels R et un même nombre de pixels B. Le nombre de pixels R et le nombre de pixels B dans chaque ligne sont égaux respectivement au nombre de pixels R et au nombre de pixels B dans chaque colonne. Dans l'exemple représenté, chaque ligne de pixels PIX du groupe élémentaire 3 comporte autant de pixels R que de pixels B. De plus, dans cet exemple, chaque colonne de pixels PIX du groupe élémentaire 3 comporte autant de pixels R que de pixels B. Le fait que chaque ligne et chaque colonne comprenne un pixel R et un pixel B permet de réduire la présence d'artefacts colorés (moiré coloré ou « aliasing », en anglais) dans l'image 2D visible.

Dans l'exemple représenté, les lignes de pixels PIX du groupe élémentaire 3 présentent toutes autant de pixels Z que de pixels R. En outre, dans cet exemple, toutes les colonnes de pixels PIX du groupe élémentaire 3 présentent autant de pixels Z que de pixels R.

Dans l'exemple représenté, toutes les lignes de pixels PIX du groupe élémentaire 3 présentent un même nombre de pixels G. En outre, dans cet exemple, toutes les colonnes de pixels PIX du groupe élémentaire 3 présentent un même nombre de pixels G. Le nombre de pixels G dans chaque ligne est égal au nombre de pixels G dans chaque colonne.

Dans l'exemple illustré en figure 2, chaque ligne de pixels PIX du groupe élémentaire 3 comporte deux fois plus de pixels G que de pixels R. De plus, dans cet exemple, chaque colonne de pixels PIX du groupe élémentaire 3 comporte deux fois plus de pixels G que de pixels R.

Dans cet exemple, les pixels G correspondent à des pixels de luminance du capteur 1. Par pixel de luminance, on entend un pixel fournissant une contribution majoritaire à un signal de luminance Y.

Les pixels R et B correspondent à des pixels de chrominance du capteur d'images 1. Par pixels de chrominance, on entend des pixels permettant d'obtenir un signal de chrominance U, appelé « différence bleu », et un autre signal de chrominance V, appelé « différence rouge ».

Au sens de la présente demande, dans le cas d'un capteur comportant N types de pixels 2D distincts, adaptés à détecter des rayonnements lumineux dans N gammes de longueurs d'onde distinctes, centrées respectivement sur N valeurs de longueurs d'onde λ1, λ2, ... λN distinctes, avec N entier supérieur ou égal à 3 et λ1 < λ2 ... < λN, on appelle pixels de chrominance les deux types de pixels ayant respectivement pour longueur d'onde centrale de sensibilité les deux longueurs d'onde extrêmes λ1 et λN du spectre de détection, et pixels de luminance le ou les autres types de pixels 2D, ayant pour longueurs d'onde centrales de sensibilité la ou les longueurs d'onde intermédiaires λi du spectre de détection, avec i entier allant de 2 à N-1.

Par longueur d'onde centrale, on entend la longueur d'onde pour laquelle le pixel présente une transmission maximale dans le spectre visible.

À titre d'exemple, les pixels G dont les filtres sont sélectivement transparents dans la région verte du spectre visible sont utilisés pour produire le signal Y de luminance et les pixels R et B dont les filtres sont sélectivement transparents dans les régions respectivement rouge et bleue du spectre visible sont utilisés pour produire les signaux V et U de chrominance.

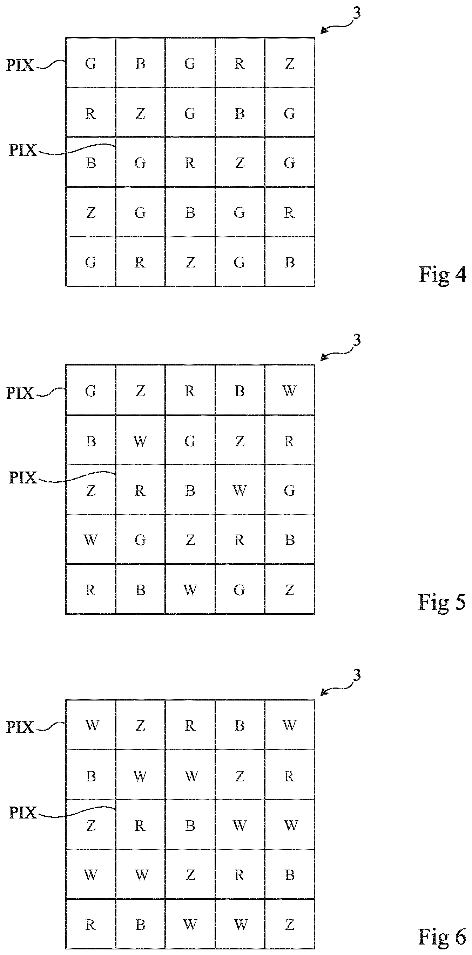

Les figures 3 et 4 sont des vues de dessus illustrant de façon schématique d'autres exemples de réalisation du groupe élémentaire 3 de pixels PIX du capteur d'images 1.

Les exemples de réalisation du groupe élémentaire 3 illustrés en figures 3 et 4 présentent chacun un même nombre de pixels PIX que dans l'exemple de la figure 2, à savoir une matrice de 5x5 pixels PIX. Les groupes élémentaires 3 des figures 3 et 4 présentent chacun une répartition de pixels R, G, B et Z, par lignes et par colonnes de la matrice, identique à celle précédemment décrite en relation avec la figure 2.

En particulier, les proportions de pixels R, B, G et Z par ligne et par colonne du groupe élémentaire 3 de la figure 3 et du groupe élémentaire 3 de la figure 4 sont identiques aux proportions de pixels R, B, G et Z par ligne et par colonne du groupe élémentaire 3 de la figure 2. Les groupes élémentaires 3 des figures 3 et 4 diffèrent du groupe élémentaire 3 de la figure 2 par le positionnement des pixels R, G, B et Z dans chaque ligne et dans chaque colonne.

Dans les modes de réalisation exposés ci-dessus en relation avec les figures 2 à 4, chaque groupe élémentaire 3 comporte exactement 5x5 pixels PIX, c'est-à-dire exactement cinq colonnes et exactement cinq lignes de pixels PIX. Chaque ligne et chaque colonne de chacun des groupes élémentaires 3 des figures 2 à 4 comprend un seul pixel Z, un seul pixel B, un seul pixel R et deux pixels G. On obtient ainsi une configuration optimale permettant de minimiser un nombre de calculs à effectuer pour reconstituer une image capturée par le capteur 1. Chaque ligne et chaque colonne comportant exactement un pixel Z et un pixel de chaque canal de chrominance (un unique pixel B et un unique pixel R), chaque information de profondeur et de chrominance est présente une seule fois sur chaque ligne et sur chaque colonne. Chaque pixel Z, R, B est en outre équidistant de quatre plus proches pixels voisins du même type. Chaque pixel Z, R, B est plus précisément séparé de quatre pixels Z, R, B voisins par une distance égale environ au pas de pixel (distance centre à centre entre deux pixels de la matrice de pixels du capteur d'images 1) multiplié par √3. Dans l'espace de Fourier, cela permet d'éviter des fréquences de répétition localisées à des endroits identiques. Cela procure une répartition homogène, évitant ou réduisant ainsi l'apparition d'effets de moiré coloré sur l'image dans les directions horizontales et verticales.

À titre de variante, on peut prévoir de remplacer tout ou partie des pixels de luminance G du groupe élémentaire 3 par des pixels de luminance W d'un autre type. Des exemples de réalisation de tels groupes élémentaires sont décrits ci-dessous en relation avec les figures 5 à 8.

La figure 5 est une vue de dessus illustrant de façon schématique encore un autre exemple de réalisation du groupe élémentaire 3 de pixels PIX du capteur d'images 1.

L'exemple de la figure 5 présente des éléments communs avec l'exemple de la figure 2. Ces éléments communs ne seront pas décrits à nouveau ci-après. L'exemple illustré en figure 5 diffère de l'exemple illustré en figure 2 en ce que, dans l'exemple de la figure 5, une partie des pixels de luminance G d'image 2D sont remplacés par des pixels de luminance W d'un autre type. Les pixels de luminance W sont des pixels d'image 2D et présentent par exemple une gamme de longueurs d'onde de sensibilité différente de celle des pixels G.

Les pixels W sont par exemple panchromatiques, c'est-à-dire adaptés à détecter la lumière sur une large partie, voire sur l'intégralité, du spectre visible, par exemple entre 400 et 700 nm. Pour cela, chaque pixel d'image 2D W comporte par exemple un filtre panchromatique. À titre de variante, les pixels W peuvent être des pixels sensibles majoritairement à de la lumière jaune, ou à de la lumière vert émeraude. Pour cela, chaque pixel d'image 2D W comporte par exemple un filtre jaune ou vert émeraude.

Dans l'exemple représenté, par rapport au groupe élémentaire 3 de la figure 2, un pixel G sur deux est remplacé par un pixel W. Plus précisément, la moitié des pixels G de chaque ligne, ou la moitié des pixels G de chaque colonne, sont par exemple substitués par un pixel W. Dans l'exemple représenté, chaque ligne comporte autant de pixels W que de pixels G, et chaque colonne comporte autant de pixels W que de pixels G.

À titre de variante, on peut prévoir un groupe élémentaire dans lequel, par rapport au groupe élémentaire 3 de la figure 5, tous les pixels G sont substitués par des pixels W et tous les pixels W sont substitués par des pixels G.

La figure 6 est une vue de dessus illustrant de façon schématique encore un autre exemple de réalisation du groupe élémentaire 3 de pixels PIX du capteur d'images 1.

L'exemple de la figure 6 présente des éléments communs avec les exemples des figures 2 et 5. Ces éléments communs ne seront pas décrits à nouveau ci-après. L'exemple illustré en figure 6 diffère des exemples illustrés en figures 2 et 5 en ce que, dans l'exemple de la figure 6, tous les pixels de luminance G d'image 2D sont remplacés par des pixels de luminance W.

Dans cet exemple, chaque ligne comporte deux fois plus de pixels W que de pixels Z, R ou B, et chaque colonne comporte deux fois plus de pixels W que de pixels Z, R ou B. Plus précisément, dans l'exemple illustré en figure 6, chaque colonne comporte exactement deux pixels W, un pixel Z, un pixel R et un pixel B. De façon analogue, chaque ligne du groupe élémentaire 3 de la figure 6 comporte exactement deux pixels W, un pixel Z, un pixel R et un pixel B.

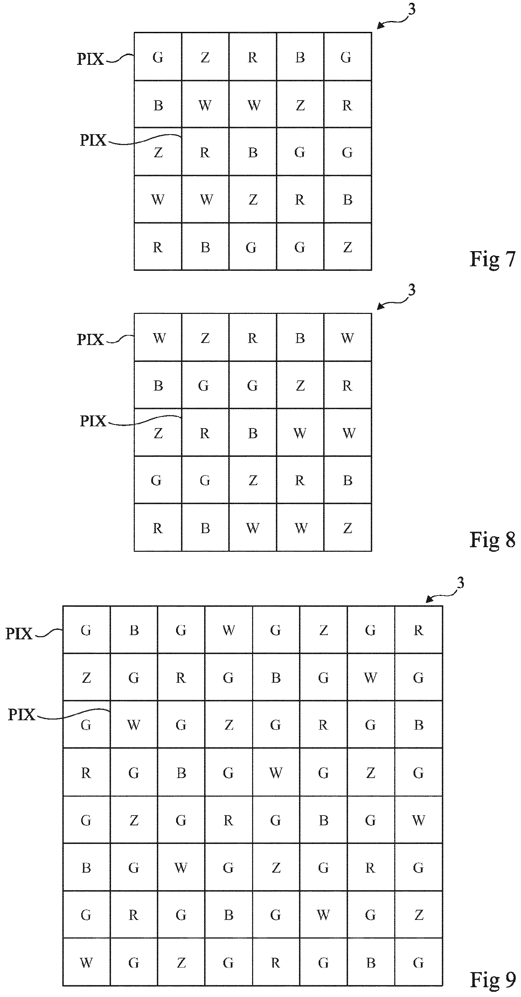

La figure 7 est une vue de dessus illustrant de façon schématique encore un autre exemple de réalisation du groupe élémentaire 3 de pixels PIX du capteur d'images 1.

L'exemple de la figure 7 présente des éléments communs avec l'exemple de la figure 2. Ces éléments communs ne seront pas décrits à nouveau ci-après. L'exemple illustré en figure 7 diffère de l'exemple illustré en figure 2 en ce que, dans l'exemple de la figure 7, une partie des pixels de luminance G d'image 2D sont remplacés par des pixels de luminance W.

Dans l'exemple représenté, par rapport au groupe élémentaire 3 de la figure 2, la moitié des pixels G sont remplacés par des pixels W. Plus précisément, tous les pixels G d'une ligne sur deux, par exemple tous les pixels G appartenant à des lignes de rang pair, sont par exemple substitués par des pixels W. Dans l'exemple représenté, par rapport au groupe élémentaire 3 de la figure 2, tous les pixels G des deuxième et quatrième lignes de pixels PIX du groupe élémentaire 3 sont substitués par des pixels W.

Un avantage du groupe élémentaire 3 de la figure 7 par rapport à celui de la figure 5 tient au fait que les pixels W sont regroupés côte à côte par paires, ce qui peut simplifier leur réalisation.

La figure 8 est une vue de dessus illustrant de façon schématique encore un autre exemple de réalisation du groupe élémentaire 3 de pixels PIX du capteur d'images 1.

L'exemple de la figure 8 présente des éléments communs avec l'exemple de la figure 2. Ces éléments communs ne seront pas décrits à nouveau ci-après. L'exemple illustré en figure 8 diffère de l'exemple illustré en figure 2 en ce que, dans l'exemple de la figure 8, une partie des pixels de luminance G d'image 2D sont remplacés par des pixels de luminance W.

Dans l'exemple représenté, par rapport au groupe élémentaire 3 de la figure 2, la moitié des pixels G sont remplacés par des pixels W. Plus précisément, tous les pixels G d'une ligne sur deux, par exemple tous les pixels G appartenant à des lignes de rang impair, sont par exemple substitués par des pixels W. Dans l'exemple représenté, par rapport au groupe élémentaire 3 de la figure 2, tous les pixels G des première, troisième et cinquième lignes de pixels PIX du groupe élémentaire 3 sont substitués par des pixels W.

La figure 9 est une vue de dessus illustrant de façon schématique encore un autre exemple du groupe élémentaire 3 de pixels PIX du capteur d'images 1, qui ne fait pas partie de l'invention.

Dans l'exemple représenté, le groupe élémentaire 3 comporte soixante-quatre pixels PIX répartis selon huit lignes et huit colonnes.

Par rapport au groupe élémentaire 3 de la figure 5, chaque ligne et chaque colonne de pixels PIX du groupe élémentaire 3 de la figure 9 comporte trois pixels de luminance supplémentaires. Dans l'exemple représenté, ces pixels supplémentaires sont des pixels G. À titre de variante, les pixels supplémentaires peuvent être, au moins en partie, des pixels W.

Dans l'exemple représenté, le groupe élémentaire 3 comporte une alternance de diagonales de pixels G et de diagonales de pixels B, R, Z et W.

Un avantage des exemples des groupes élémentaires 3 décrits en relation avec les figures 2 à 9 tient au fait qu'ils permettent au capteur d'images 1 de présenter de bonnes performances colorimétriques. En outre, les images 2D captées par le capteur d'images 1 présentent peu d'artefacts de reconstruction de couleur tels que le moiré coloré (« aliasing », en anglais).

Plus généralement, dans un mode de réalisation chaque groupe élémentaire 3 de pixels est une matrice carrée de 5x5 pixels, dans laquelle chaque ligne de pixels comprend exactement un pixel de profondeur. Chaque colonne de pixels comprend exactement un pixel de profondeur. Toutes les lignes et toutes les colonnes présentent un même nombre de pixels de chrominance de chaque type. Les pixels de chrominance d'un type, par exemple les pixels de chrominance ayant pour longueur d'onde centrale de sensibilité la longueur d'onde inférieure λ1 du spectre de détection, sont présents, sur chaque ligne et sur chaque colonne de la matrice, en même quantité que les pixels de chrominance de l'autre type, c'est-à-dire, dans cet exemple, les pixels de chrominance ayant pour longueur d'onde centrale de sensibilité la longueur d'onde supérieure λN du spectre de détection. Chaque ligne de la matrice du groupe élémentaire 3 de pixels comprend deux fois plus de pixels de luminance que de pixels de chrominance de chaque type. De plus, chaque colonne de la matrice du groupe élémentaire 3 de pixels comprend deux fois plus de pixels de luminance que de pixels de chrominance de chaque type. Toutes les lignes et toutes les colonnes présentent un même nombre de pixels de luminance de chaque type. Le nombre de pixels de profondeur est par ailleurs égal, sur chaque ligne et sur chaque colonne, au nombre de pixels de chrominance de chaque type.

Ces caractéristiques permettent d'obtenir des performances colorimétriques accrues et des artefacts réduits par rapport aux dispositifs connus, notamment par rapport à des dispositifs connus comprenant des pixels d'image 2D et des pixels de profondeur. Cela permet en outre l'obtention d'une information de profondeur présentant une résolution satisfaisante pour les applications visées par le capteur 1.

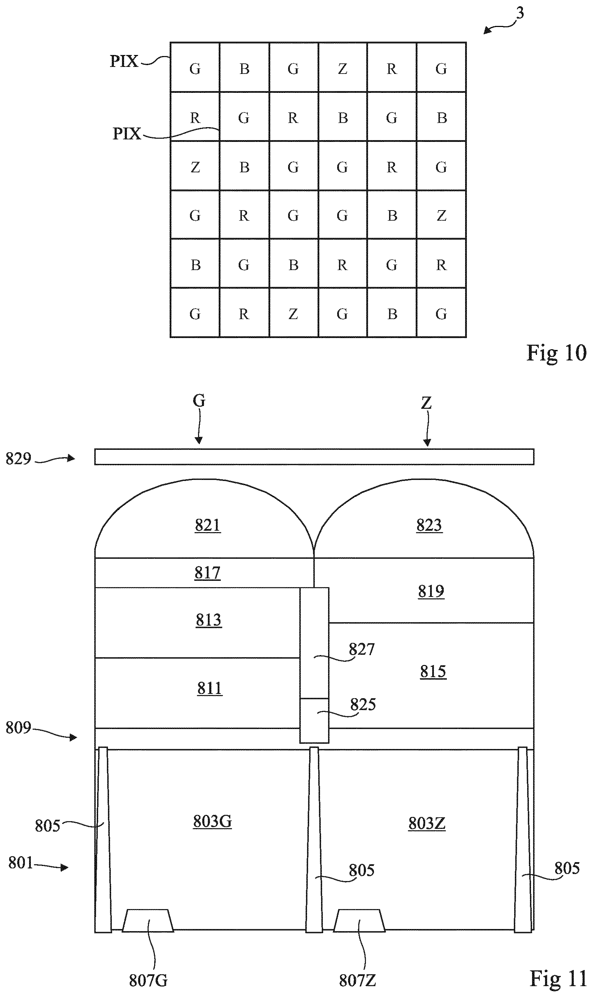

La figure 10 est une vue de dessus illustrant de façon schématique encore un autre exemple du groupe élémentaire 3 de pixels PIX du capteur d'images 1 qui ne fait pas partie de l'invention.

Dans l'exemple représenté, toutes les lignes et toutes les colonnes du groupe élémentaire 3 comportent au moins un pixel R, un pixel G et un pixel B. Certaines lignes et certaines colonnes ne comportent pas de pixels Z.

La figure 11 est une vue en coupe illustrant de façon schématique et partielle un pixel d'image 2D, par exemple un pixel G, et un pixel Z de profondeur du capteur d'images 1.

Dans l'exemple représenté, les pixels G et Z sont formés dans et sur un substrat 801. Le substrat 801 est par exemple en un matériau semiconducteur, par exemple le silicium.

Des zones photosensibles sont par exemple formées dans le substrat 801. Plus précisément, dans cet exemple, une zone photosensible 803G du pixel G et une zone photosensible 803Z du pixel Z sont formées dans le substrat 801. Les zones photosensibles 803G et 803Z, ou zones de photoconversion, sont par exemple isolées l'une de l'autre et par rapport aux pixels adjacents par des tranchées d'isolation 805. À titre d'exemple, les tranchées d'isolation 805 sont des tranchées d'isolation profondes capacitives (« Capacitive Deep Trench Isolation » - CDTI, en anglais).

Dans l'exemple représenté, des régions 807G, 807Z de collecte des porteurs photogénérés respectivement dans les zones photosensibles 803G et 803Z sont formées dans le substrat 801. Dans cet exemple, les régions 807G et 807Z pénètrent dans l'épaisseur des zones photosensibles 803G et 803Z depuis une face inférieure des zones 803G et 803Z. À titre d'exemple, les régions 807G et 807Z sont dopées de type N.

Bien que cela n'ait pas été représenté en figure 11, les régions 807G et 807Z sont par exemple connectées à des circuits de commande situés dans le substrat 801.

Dans l'exemple représenté, une face supérieure du substrat 801 est revêtue d'une couche 809 anti-reflets. La couche 809 permet par exemple d'optimiser les performances optiques des pixels G et Z.

Dans l'exemple illustré en figure 11, un filtre couleur 811 revêt une partie de la face supérieure de la couche 809 anti-reflets située à l'aplomb de la zone photosensible 803G du pixel G. Le filtre couleur 811 est, dans cet exemple, un filtre passe-bande transmettant majoritairement de la lumière verte.

Dans l'exemple représenté, le filtre couleur 811 est revêtu d'une couche 813. La couche 813 est par exemple en une résine transmettant la lumière visible et absorbant les rayonnements dans la plage de longueurs d'onde de détection du pixel Z. À titre de variante, la couche 813 en résine peut être remplacée par un filtre interférentiel. À titre de variante, on peut prévoir que le filtre couleur 811 revête la couche 813 en résine.

Dans l'exemple illustré en figure 11, un filtre infrarouge 815 revêt une partie de la face supérieure de la couche 809 anti-reflets située à l'aplomb de la zone photosensible 803Z du pixel Z. Le filtre infrarouge 815 est, dans cet exemple, un filtre passe-bande adapté à transmettre majoritairement un rayonnement infrarouge dans la plage de longueurs d'onde de détection du pixel Z.

Dans l'exemple représenté, la face supérieure de la couche 813 en résine et la face supérieure du filtre infrarouge 815 sont respectivement revêtues de couches 817 et 819. Des microlentilles 821 et 823 sont respectivement situées sur et en contact avec la face supérieure des couches 817 et 819.

Les couches 817 et 819 permettent par exemple de compenser des différences de hauteur entre d'une part un empilement constitué du filtre couleur 811 et de la couche 813 et d'autre part de la couche 815. Cela permet par exemple d'obtenir une surface plane avant la réalisation des microlentilles 821 et 823.

Dans l'exemple représenté, le filtre couleur 811 et la couche 813 sont isolées optiquement du filtre 815 par un écran 825 et une couche verticale 827. À titre d'exemple, l'écran 825 est en un métal, par exemple le tungstène, et la couche 827 est en un matériau présentant un indice de réfraction inférieur aux indices de réfraction des couches 811, 813 et 815.

Dans l'exemple représenté, un filtre 829 est situé au-dessus des microlentilles 821 et 823. Le filtre 829 est par exemple un filtre de type « double-bande », par exemple adapté à transmettre tout ou partie du spectre visible et une partie du spectre infrarouge dans la gamme de longueurs d'onde de fonctionnement du pixel Z. À titre d'exemple, le filtre 829 laisse passer des rayonnements sur une première plage de longueurs d'onde comprises entre 350 et 650 nm et sur une deuxième plage de longueurs d'onde comprises entre 920 et 960 nm, et coupe les rayonnements en dehors de ces plages.

Les pixels R, B et éventuellement W du capteur 1 peuvent présenter une structure analogue à celle exposée ci-dessus en relation avec le pixel G, le filtre couleur 811 étant par exemple adapté en fonction du type de pixel.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, on pourra remplacer les pixels R, G et B sensibles majoritairement dans le rouge, le vert et le bleu par des pixels sensibles à d'autres couleurs, par exemple le cyan, le jaune et le magenta.

En outre, bien que l'on ait décrit ci-dessus des exemples d'application dans lesquels les pixels de profondeur du capteur d'images sont adaptés à effectuer des mesures de distance par temps de vol, les modes de réalisation sont plus généralement transposables à des capteurs d'images comprenant tout type de pixel permettant de fournir une information de profondeur, par exemple des pixels d'acquisition de lumière structurée, des photodiodes à avalanche pour la détection de photons uniques (« Single Photon Avalanche Diode » - SPAD, en anglais), etc.

Enfin, la mise en œuvre pratique des modes de réalisation et variantes décrits est à la portée de la personne du métier à partir des indications fonctionnelles données ci-dessus.

## Revendications

1. Capteur d'images (1) comprenant une pluralité de pixels (PIX) répartis en groupes élémentaires (3) de 5x5 pixels, chaque groupe élémentaire étant constitué de plusieurs pixels adjacents agencés en matrice selon des lignes et des colonnes, chaque ligne et chaque colonne de chaque groupe élémentaire comportant exactement :
- un premier pixel (R) d'image visible sensible majoritairement à de la lumière rouge ;
- un deuxième pixel (B) d'image visible sensible majoritairement à de la lumière bleue ;
- deux troisièmes pixels (G, W) de luminance ;
le capteur étant **caractérisé en ce que** chaque ligne et chaque colonne du groupe élémentaire (3) comporte exactement :
- un quatrième pixel (Z) d'image de profondeur.

2. Capteur selon la revendication 1, dans lequel tous les troisièmes pixels (G) sont sensibles majoritairement à de la lumière verte.

3. Capteur selon la revendication 1, dans lequel tous les troisièmes pixels (W) sont sensibles majoritairement à de la lumière blanche, jaune ou vert émeraude.

4. Capteur selon la revendication 1, dans lequel les troisièmes pixels comportent des pixels d'un premier type (G) et des pixels d'un deuxième type (W) sensibles dans des gammes de longueurs d'onde différentes.

5. Capteur selon la revendication 4, dans lequel :
- les troisièmes pixels du premier type (G) sont sensibles majoritairement à de la lumière verte ; et
- les troisièmes pixels du deuxième type (W) sont sensibles majoritairement à de la lumière blanche, jaune ou vert émeraude.

6. Capteur selon la revendication 4 ou 5, dans lequel chaque groupe élémentaire (3) présente autant de troisièmes pixels du premier type (G) que de troisièmes pixels du deuxième type (W).

7. Capteur selon la revendication 6, dans lequel, à l'intérieur de chaque groupe de pixels (3), toutes les lignes et toutes les colonnes présentent un même nombre de troisièmes pixels du premier type (G) et de troisièmes pixels du deuxième type (W).

8. Capteur selon la revendication 6, dans lequel, à l'intérieur de chaque groupe de pixels (3), les troisièmes pixels d'une ligne sur deux sont tous du premier type (G), les troisièmes pixels des autres lignes étant tous du deuxième type (W).

9. Capteur selon l'une quelconque des revendications 1 à 8, dans lequel le quatrième pixel (Z) est un pixel de mesure de distance par temps de vol.

## Patentansprüche

1. Bildsensor (1) aufweisend eine Vielzahl von Pixeln (PIX), die in Elementargruppen (3) von 5x5 Pixeln unterteilt sind, wobei jede Elementargruppe aus einer Vielzahl von benachbarten Pixeln besteht, die in einer Matrix in Zeilen und Spalten angeordnet sind, wobei jede Zeile und jede Spalte jeder Elementargruppe genau Folgendes aufweist:
- ein erstes Pixel (R) für ein sichtbares Bild, das überwiegend für rotes Licht empfindlich ist;
- ein zweites Pixel (B) für ein sichtbares Bild, das überwiegend für blaues Licht empfindlich ist;
- zwei dritte Pixel (G, W) für Luminanz;
wobei der Sensor **dadurch gekennzeichnet ist, dass** jede Zeile und jede Spalte der Elementargruppe (3) genau Folgendes aufweist:
- ein viertes Pixel (Z) für Bildtiefe.

2. Sensor gemäß Anspruch 1, bei dem alle dritten Pixel (G) überwiegend für grünes Licht empfindlich sind.

3. Sensor gemäß Anspruch 1, wobei alle dritten Pixel (W) überwiegend für weißes, gelbes oder smaragdgrünes Licht empfindlich sind.

4. Sensor gemäß Anspruch 1, wobei die dritten Pixel Pixel eines ersten Typs (G) und Pixel eines zweiten Typs (W) aufweisen, die in unterschiedlichen Wellenlängenbereichen empfindlich sind.

5. Sensor gemäß Anspruch 4, wobei:
- die dritten Pixel des ersten Typs (G) überwiegend für grünes Licht empfindlich sind; und
- die dritten Pixel des zweiten Typs (W) überwiegend für weißes, gelbes oder smaragdgrünes Licht empfindlich sind.

6. Sensor gemäß Anspruch 4 oder 5, wobei jede Elementargruppe (3) ebenso viele dritte Pixel des ersten Typs (G) wie dritte Pixel des zweiten Typs (W) aufweist.

7. Sensor gemäß Anspruch 6, wobei innerhalb jeder Pixelgruppe (3) alle Zeilen und alle Spalten eine gleiche Anzahl von dritten Pixeln des ersten Typs (G) und von dritten Pixeln des zweiten Typs (W) aufweisen.

8. Sensor gemäß Anspruch 6, wobei innerhalb jeder Gruppe (3) von Pixeln die dritten Pixel jeder zweiten Reihe alle vom ersten Typ (G) sind, wobei die dritten Pixel der anderen Reihen alle vom zweiten Typ (W) sind.

9. Sensor gemäß einem der Ansprüche 1 bis 8, wobei das vierte Pixel (Z) ein Pixel zum Messen von Abstand durch Laufzeit ist.

## Claims

1. An image sensor (1) comprising a plurality of pixels (PIX) divided in elementary groups (3) of 5x5 pixels, each elementary group consisting of a plurality of adjacent pixels arranged in a matrix, in rows and columns, each row and each column of each elementary group including exactly:
- a first visible image pixel (R) predominantly sensitive to red light;
- a second visible image pixel (B) predominantly sensitive to blue light;
- two third luminance pixels (G, W);
the sensor being **characterized in that** each row and each column of the elementary group (3) includes exactly:
- a fourth depth image pixel (Z).

2. The sensor according to claim 1, wherein all third pixels (G) are predominantly sensitive to green light.

3. The sensor according to claim 1, wherein all third pixels (W) are predominantly sensitive to white, yellow or emerald-green light.

4. The sensor according to claim 1, wherein the third pixels include pixels of a first type (G) and pixels of a second type (W) sensitive in different wavelength ranges.

5. The sensor according to claim 4, wherein:
- the third pixels of the first type (G) are predominantly sensitive to green light; and
- the third pixels of the second type (W) are predominantly sensitive to white, yellow or emerald-green light.

6. The sensor according to claim 4 or 5, wherein each elementary group (3) has as many third pixels of the first type (G) as third pixels of the second type (W).

7. The sensor according to claim 6, wherein, within each group (3) of pixels, all rows and all columns have an equal number of third pixels of the first type (G) and of third pixels of the second type (W).

8. The sensor according to claim 6, wherein, within each group (3) of pixels, the third pixels of every other row are all of the first type (G), the third pixels of the other rows being all of the second type (W).

9. The sensor according to any of claims 1 to 8, wherein the fourth pixel (Z) is a pixel for measuring distance by time-of-flight.
